**Europäisches Patentamt**

**European Patent Office**

**Office européen des brevets**

(19)

(11) **EP 1 596 520 A2**

## (12) EUROPEAN PATENT APPLICATION

(43) Date of publication:
**16.11.2005 Bulletin 2005/46**

(51) Int Cl.⁷: **H04L 1/06**, H04B 7/06, H04B 7/08

(21) Application number: **05252490.7**

(22) Date of filing: **21.04.2005**

| | |
|---|---|
| (84) Designated Contracting States:<br>**AT BE BG CH CY CZ DE DK EE ES FI FR GB GR HU IE IS IT LI LT LU MC NL PL PT RO SE SI SK TR**<br>Designated Extension States:<br>**AL BA HR LV MK YU**<br><br>(30) Priority: **12.05.2004 GB 0410644**<br><br>(71) Applicant: **KABUSHIKI KAISHA TOSHIBA**<br>**Tokyo 105-8001 (JP)** | (72) Inventors:<br>• **Sun, Yong, Toshiba Research Europe Limited**<br>**Bristol BS1 4ND (GB)**<br>• **Tan, Hwa Sin, Toshiba Research Europe Limited**<br>**Bristol BS1 4ND (GB)**<br><br>(74) Representative: **Round, Edward Mark**<br>**Marks & Clerk**<br>**90 Long Acre**<br>**London WC2E 9RA (GB)** |

(54) **Spatial division multiplexing for MIMO devices**

(57)    A communications system, comprising a transmitter and a receiver, are operable to communicate information using a spatial multiplexing method. The transmitter is operable to separate data to be transmitted into two categories, Alamouti encoding the symbols of the first category and transmitting them on an even number of antennae, and not encoding the second category of symbols, but merely using a modulation scheme such as QAM, and transmitting them on one or more further antennae.

A corresponding receiver is operable to successively detect signal components received on corresponding spatially displaced antennae, and then to determine an estimated channel response from the signal components. A weighting function is then derived to extract a stream of data from the received signal, which, on the basis that the Alamouti STBC encoded signal will have the highest signal to noise ratio, will normally be the latter, while other data not encoded according to Alamouti is detected thereafter.

FIGURE 2

**Description**

This invention relates to the communication of information in a wireless communications system using spatial division multiplexing in Multiple Input, Multiple Output (MIMO) devices.

A popular method of transmitting data for multiple antennae is to use a spatial multiplexing process, particularly the one known as V-BLAST and described in "V-BLAST: an architecture for realizing very high data rates over the rich-scattering wireless channel" (Wolniansky, P.W.; Foschini, G.J.; Golden, G.D.; Valenzuela, R.A: 1998 URSI International Symposium on Signals, Systems, and Electronics, 1998; ISSSE 98., 29 Sept.-2 Oct. 1998, pp. 295-300).

In V-BLAST, each transmit antenna (Tx) consists of a conventional quadrature amplitude modulation (QAM) modulator. The receiver can employ ordered successive interference cancellation (OSIC) algorithm, coupled either with zero forcing (ZF) or with minimum mean square error (MMSE), to spatially separate the transmit streams that would deliver reasonable performance at linear complexity while achieving high data rate.

The principle of operation of a process incorporating the OSIC algorithm is to detect the stream with the highest signal-to-interference-plus-noise ratio (SINR) and subtract it from the received signal. This is followed by detection and subtraction of the undecoded transmit data stream with the next highest SINR, and repeated iteratively until every transmit data stream has been detected. However, this transmit technique coupled with the OSIC detection algorithm can only work well when the number of receive antennae (Rx) is greater than the number of transmit antennae Tx. In addition, temporal diversity cannot be exploited for this transmit scheme.

"A simple transmit diversity technique for wireless communications" (Alamouti, S.M.; IEEE Journal on Select Areas in Communications: Vol. 16, No. 8, Oct. 1998, pp. 1451-1458) describes a Space Time Block Code scheme (STBC), which is a multiple antennae transmit diversity scheme that can achieves both temporal and spatial diversity. In that publication, the scheme is described in terms of two transmit antennae, and the transmit symbols are arranged at the two transmit antennae such that they are orthogonal to each other over a period of two transmit symbols. Hereinafter, the transmit scheme is known as 'Alamouti STBC' and the corresponding detector is known as an Alamouti detector.

Due to this orthogonal structure, the received signal can be combined and detected by means of a maximum likelihood (ML) detector at linear complexity. Compared with the V-BLAST scheme, Alamouti STBC is more robust to correlated fading because it does not requires a ZF or an MMSE detector to spatially separate the transmit streams for detection. In order to achieve this additional temporal diversity, Alamouti STBC compromises on data rate; for a given modulation scheme, a lower data rate is delivered using Alamouti STBC in comparison with V-BLAST.

Further improvements, to enable Alamouti STBC robustness to be provided in a system involving use of more than two transmit antennae, have been suggested in "Increasing data rate over wireless channels" (Naguib, A.F.; Seshadri, N.; Calderbank, A.R. Signal Processing Magazine, IEEE, Vol. 17, No. 3, May 2000, pp. 76-92) and "Spatial division multiplexing of space-time block codes" (Rouquette-Leveil, S.; Gosse, K.; Xiangyang Zhuang; Vook, F.W.; International Conference on Communication Technology Proceedings, 2003; ICCT 2003, Vol. 2, 9-11 April 2003).

As described in these two documents, by concatenating Alamouti transmitters, an OSIC algorithm can be applied to the received signal where, in a first step, the Alamouti pair with the highest SINR is detected; then, this stream is cancelled from the received signal, and then the second pair is detected. Not only does this provide additional temporal diversity, the minimum number of receivers antennae required to successfully detect both pairs of Alamouti STBC encoded transmitters is half of that required in a V-BLAST arrangement.

However, since this approach involves concatenating Alamouti pairs, an even number of transmit antennae is required. This does not provide a solution for economically attractive configurations with an odd number of transmit antennae. The attractiveness of an odd number of antennae relates to the fact that, should the capacity of a transmission channel be sufficient with an odd number of antennae, then additional cost needs to be expended on a further antenna to bring the total number of antennae to an even number to allow the above described technique to operate. This is particularly evident in the case of a system requiring, for capacity reasons, three transmit antennae, wherein an additional antenna to bring the total to four represents a 33% increase in hardware with associated cost and maintenance issues.

It is thus an aim of an aspect of the invention to provide a spatial division multiplexing scheme, offering an improved temporal diversity in comparison with V-BLAST.

Further, it is an aim of an aspect of the invention to provide a spatial division multiplexing scheme suitable for use in a system involving 3 or a higher number of transmit antennae.

Further, it is an aim of an aspect of the invention to provide a spatial division multiplexing scheme capable of being used in a system involving an odd number of transmit antennae.

One aspect of the invention provides a method of transmitting a signal from a transmitter in a communications system, the signal comprising a plurality of modulated symbols for transmission, comprising the steps of separating symbols of data to be transmitted into two categories, encoding the first category of symbols using an Alamouti space time block code (STBC) encoding scheme, and not encoding the second category in the same Alamouti scheme, then transmitting all symbols using spatial transmission.

Preferably, the method comprises receiving symbols in an unmodulated form and applying a modulation process to the symbols to be transmitted. In a preferred embodiment, the symbols are modulated using QAM.

In one embodiment, the symbols in the second category are processed for transmission by selectively replacing symbols by their complex conjugate. In one embodiment of the invention, alternate symbols in the second category are replaced by their complex conjugate.

Preferably, the step of separating symbols comprises selecting successive pairs of symbols of a stream of symbols for transmission.

In a preferred embodiment, the step of separating symbols comprises selecting alternate successive pairs of symbols for encoding, into said first and second categories.

The step of encoding a pair of symbols in the first category of symbols using an Alamouti scheme may include the step of encoding the pair of symbols for simultaneous transmission on spatially relatively displaced antennas. Two relatively spatially displaced antennas may be provided. A further step in accordance with the Alamouti scheme may include encoding the complex conjugates of the symbols for transmission in a subsequent symbol transmission period on said spatially relatively displaced antennas. The latter transmission may be effected for each complex conjugate of a symbol on another antenna from that on which the corresponding original symbol had been transmitted immediately previously. Thus, in the case that two spatially displaced antennas are provided, the later transmission of a complex conjugate of a symbol may take place on the other of the two antennas from that on which the symbol was earlier transmitted.

Another aspect of the invention provides a method of receiving a spatial division multiplexed signal comprising the steps of identifying at least two signal components received on spatially displaced antennae, determining an estimated channel response from the signal components, determining directly from the estimated channel response, a weighting function to apply to the received signal to extract a stream of data, applying said weighting function so as to extract said stream and removing the effect of said stream of data from said received signal then repeating said weighting function determination and data stream extraction steps so as to extract a further stream of data thereafter.

Another aspect of the invention provides a method of transmitting a signal from a transmitter to a receiver in a communications system comprising the steps of transmitting a signal by means of the steps of separating symbols of data to be transmitted into two categories, encoding the first category of symbols using an Alamouti encoding scheme, and not encoding the second category of symbols by the same Alamouti scheme, then transmitting all symbols using spatial transmission, then receiving and decoding a signal by any suitable process.

Another aspect of the invention provides a transmitter comprising separating means for separating symbols of data to be transmitted into two categories, Alamouti encoding means for encoding the first category of symbols using an Alamouti encoding scheme, and transmitting means for transmitting all encoded symbols of the first category and the symbols of the second category using spatial transmission.

Another aspect of the invention provides a receiver comprising signal component identifying means for identifying at least three signal components received on spatially displaced antennae, channel response estimation means for determining an estimated channel response from the signal components, weighting determination means for determining, from the estimated channel response, a weighting function to apply to the received signal to extract a stream of data, such that in use the weighting function is applied to the received signal to extract said stream and that a further weighting function can be determined thereafter and reapplied to the received signal having had the effect of the earlier determined stream of data removed therefrom.

Another aspect of the invention provides a communications system comprising a transmitter and a receiver, the transmitter comprising separating means for separating symbols of data to be transmitted into two categories, Alamouti encoding means for encoding the first category of symbols using an Alamouti encoding scheme, and transmitting means for transmitting all encoded symbols of the first category and all symbols of the second category using spatial transmission.

Another aspect of the invention provides a computer program product, comprising a computer readable storage medium on which is stored information which, when loaded into a computer causes the computer to perform a method of transmitting a signal from a transmitter in a communications system, comprising the steps of separating symbols of data to be transmitted into two categories, encoding the first category of symbols using an Alamouti encoding scheme, and not encoding the second category in the same Alamouti scheme, transmitting all encoded and non-encoded symbols using spatial transmission.

Another aspect of the invention provides a computer program product, comprising a computer readable storage medium on which is stored information which, when loaded into a computer causes the computer to perform a method of receiving a spatial division multiplexed signal comprising the steps of identifying at least three signal components received on spatially displaced antennae, determining an estimated channel response from the signal components, determining, from the estimated channel response, a weighting function to apply to the received signal to extract a stream of data, applying said weighting function so as to extract said stream and removing the effect of said stream of data from said received signal then repeating said weighting function determination and data stream extraction steps so as to extract a further stream of data thereafter.

Another aspect of the invention provides a computer program product, comprising a computer readable storage medium on which is stored information which, when loaded into a computer, causes the computer to operate as a transmitter comprising separating means for separating symbols of data to be transmitted into two categories, Alamouti encoding means for encoding the first category of symbols using an Alamouti encoding scheme, and transmitting means for transmitting all symbols, encoded or otherwise using spatial transmission.

Another aspect of the invention provides a computer program product, comprising a computer readable storage medium on which is stored information which, when loaded into a computer, causes the computer to operate as a receiver comprising signal component identifying means for identifying at least three signal components received on spatially displaced antennae, channel response estimation means for determining an estimated channel response from the signal components, weighting determination means for determining, from the estimated channel response, a weighting function to apply to the received signal to extract a stream of data, such that in use the weighting function is applied to the received signal to extract said stream and that a further weighting function can be determined thereafter and reapplied to the received signal having had the effect of the earlier determined stream of data removed therefrom.

Another aspect of the invention provides a computer receivable signal bearing information which, when loaded into a computer, causes the computer to perform a method of transmitting a signal from a transmitter in a communications system, comprising the steps of separating symbols of data to be transmitted into two categories, encoding the first category of symbols using an Alamouti encoding scheme, while not encoding the second category in the same Alamouti scheme, transmitting all symbols using spatial transmission.

Another aspect of the invention provides a computer receivable signal bearing information which, when loaded into a computer, causes the computer to operate as a transmitter comprising separating means for separating symbols of data to be transmitted into two categories, Alamouti encoding means for encoding the first category of symbols using an Alamouti encoding scheme, and transmitting means for transmitting all symbols, encoded or otherwise, using spatial transmission.

Another aspect of the invention provides a computer receivable signal bearing information which, when loaded into a computer, causes the computer to operate as a receiver comprising signal component identifying means for identifying at least three signal components received on spatially displaced antennae, channel response estimation means for determining an estimated channel response from the signal components, weighting determination means for determining, from the estimated channel response, a weighting function to apply to the received signal to extract a stream of data, such that in use the weighting function is applied to the received signal to extract said stream and that a further weighting function can be determined thereafter and reapplied to the received signal having had the effect of the earlier determined stream of data removed therefrom.

An advantage of transmitting in accordance with the invention is that the signal so produced is capable of being received using equipment already known in the art.

However, an advantage of receiving the signal in accordance with the invention is that the detection in accordance with the invention provides a substantial increase in performance as compared to the V-BLAST with OSIC algorithm. Firstly, in comparison with the latter, additional temporal diversity gain is achieved. Secondly, communication in such circumstances is more robust to correlated fading channels.

A further advantage of an aspect of the invention is that transmission enables the introduction of Alamouti STBC robustness to a transmitter without restriction to the provision of an even number of antennae and associated hardware. This advantage is particularly evident in the provision of three transmit antennae rather than four, in which the proportionate savings in terms of provision of antenna hardware is 25%.

A further advantage of the detection method provided in accordance with an aspect of the invention is that it requires less extensive processing than detection in accordance with the OSIC algorithm due the omission of SINR calculation.

As will be apparent from the following description of specific embodiments of the invention, a transmitter including three transmit antennae can provide spectral efficiency similar to that available using methods in accordance with the disclosures by Naguib et al. and Rouquette-Leveil et al. referred to above, while only requiring the same minimum number of receive antennae to successfully decode the symbols at linear complexity. However, the number of transmit antennae required to deliver this spectral efficiency is less than that of the arrangements illustrated in those disclosures, which thus provides savings in terms of provision of equipment, cost, space and power consumption.

Further aspects and advantages of the invention will become apparent from the following description of specific embodiments of the invention, and variations and modifications thereof, described by way of example only, with reference to the accompanying drawings in which:

Figure 1 is a schematic diagram showing a transmitter and a receiver in a communications system;

Figure 2 is a schematic diagram of the transmitter illustrated in Figure 1;

Figure 3 is a schematic data timing diagram showing fragmentation of data within the transmitter illustrated in Figure 2;

Figure 4 illustrates a flow diagram of an Alamouti encoder of the transmitter illustrated in Figure 2;

Figure 5 illustrates a flow diagram of a process performed by a QAM modulator of the transmitter illustrated in Figure 2;

Figure 6 illustrates schematically the receiver illustrated in Figure 2;

Figure 7 illustrates a flow diagram of a process performed by a decoder of the receiver illustrated in Figure 6; and

Figure 8 illustrates a process performed by a decoder of an alternative embodiment of a receiver illustrated in Figure 2.

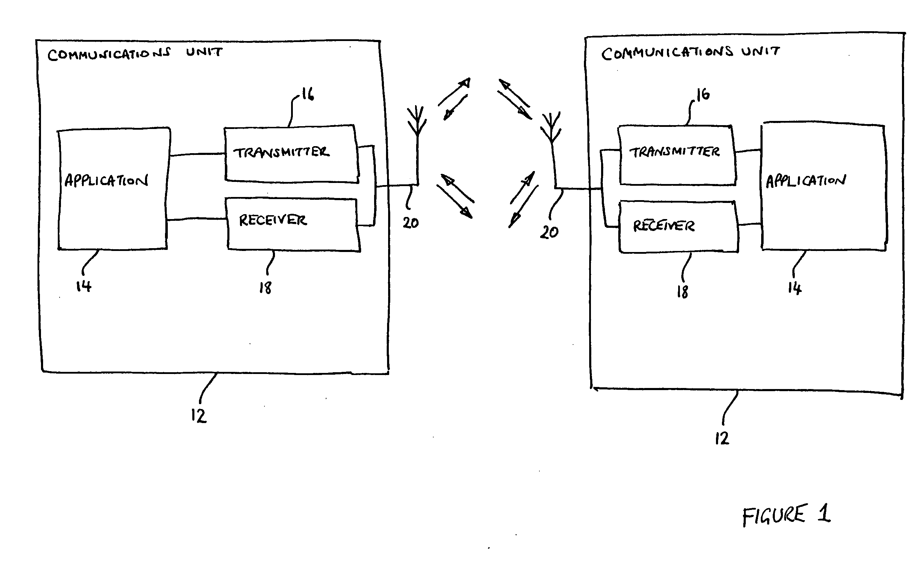

Referring firstly to Figure 1, a communications system 10 is illustrated, in this example for convenience comprising two communications units 12. Each communications unit 12 comprises one or more application units 14, in data communication with a transmitter 16 and a receiver 18. The transmitter 16 and receiver 18 are considered to communicate with an antenna unit 20, comprising a plurality of antenna elements to enable establishment of multiple input multiple output (MIMO) communication with other communications units 12. The system 10 exists in a scattering environment, to enable advantage to be taken of many paths for communication between the two illustrated communications units 12.

In use, an application 14 will pass data for transmission to a transmitter 16, which will then process the data and drive the antenna unit 20 to establish electromagnetic radiation which can then be detected by an antenna unit 20 of another communications unit 12.

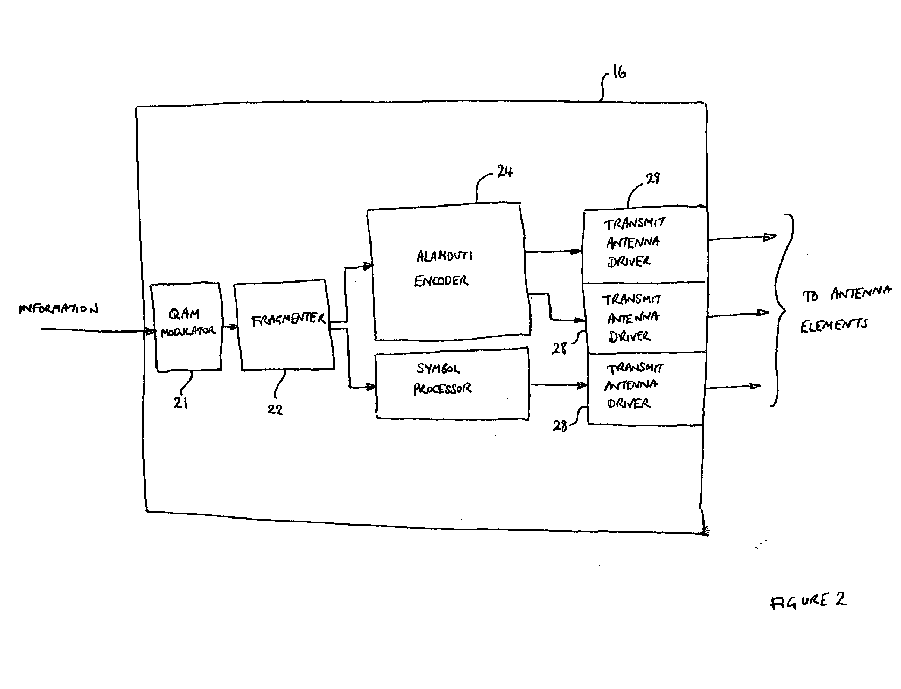

On receipt of electromagnetic radiation in this way, the antenna unit 20 produces signals which can then be detected by a receiver 18 of a communications unit 12. The receiver 18 decodes the signals to detect data to be then passed to an application 14 of that communications unit 12. The structure of a transmitter 16 is illustrated in Figure 2.

The transmitter 16 comprises a QAM modulator 21 operable to receive information to be transmitted, and to convert this into a stream of QAM modulated symbols. A fragmenter 22 operable to receive QAM modulated symbols from the QAM modulator 21, and to identify symbols in that information for transmission, to be passed either to an Alamouti encoder 24 or to a symbol processor 26. Both the Alamouti encoder 24 and the symbol processor 26 process information passed to them into encoded waveforms for passing to three transmit antenna drivers 28 which drive corresponding antenna elements of the antenna unit 20. The Alamouti encoder 24 passes waveforms to two transmit antenna drivers 28, while the symbol processor 26 passes a waveform to a single transmit antenna driver 28. In this way, the transmitter can process information passed to it, while only requiring three transmit antenna drivers 28.

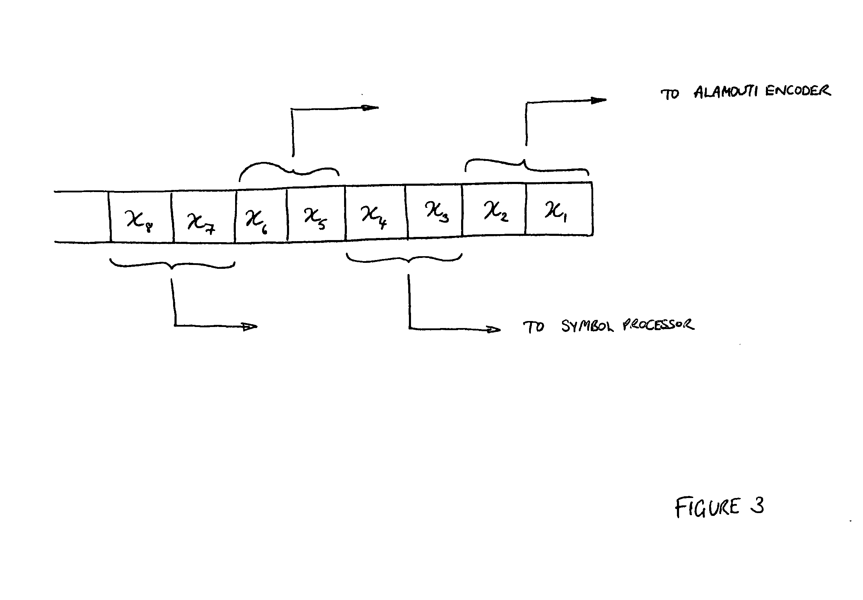

As shown in Figure 3, in use, the fragmenter 22 identifies a stream of symbols in the information passed to it, the symbols being illustrated in Figure 3 sequentially by $x_1, x_2, x_3 \ldots x_n$, where $x_1$ is the earliest encountered symbol. Successive pairs of symbols are passed alternately to the Alamouti encoder 24 and the symbol processor 26. As illustrated in Figure 3, the symbols $x_1$ and $x_2$ are passed to the Alamouti encoder 24 and symbols $x_3$ and $x_4$ are sent to the symbol processor 26, for further processing.

In use, the Alamouti encoder 24 sends a pair of symbols to two transmit antenna elements 20, and then resends the same two symbols, reversed and processed in accordance with Alamouti, in the next symbol period. In the same two symbol periods, the symbol processor 26 sends the first of its two symbols to the respective transmit antenna element 20, and then sends a processed version of the next symbol thereafter in the second symbol period.

By sending the symbols as a pair, and then reversed so that the symbols are sent on the opposite spatial channels, the robustness of the data transmission is inherently increased, relative to transmitting it only once.

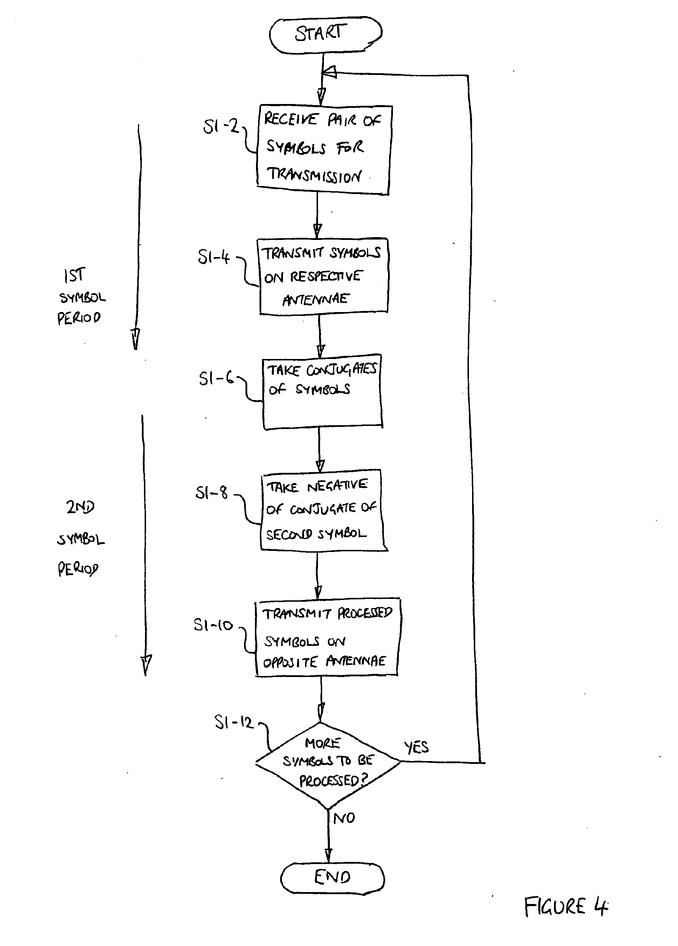

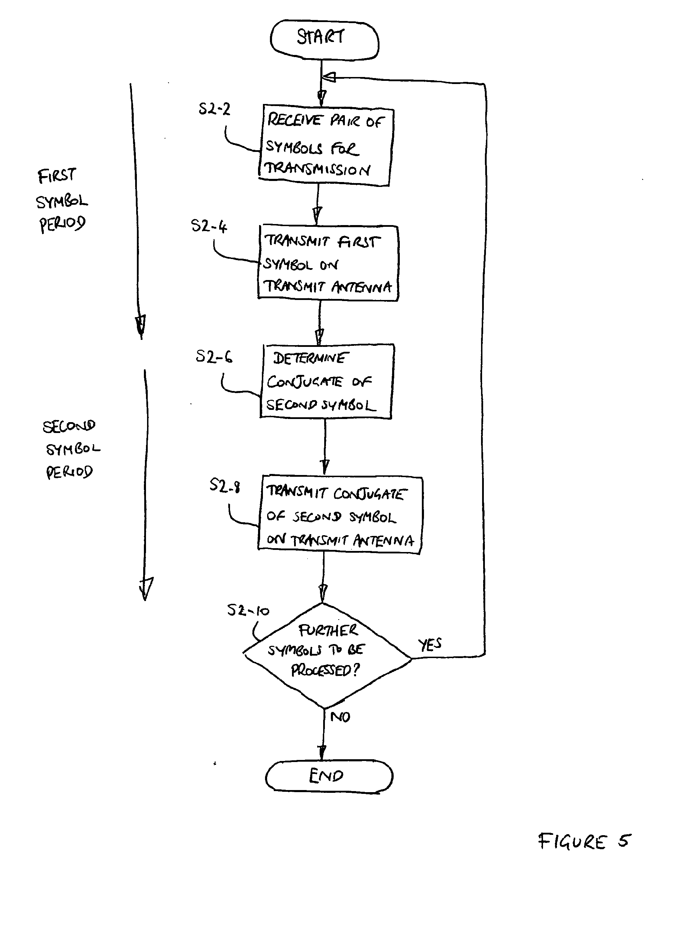

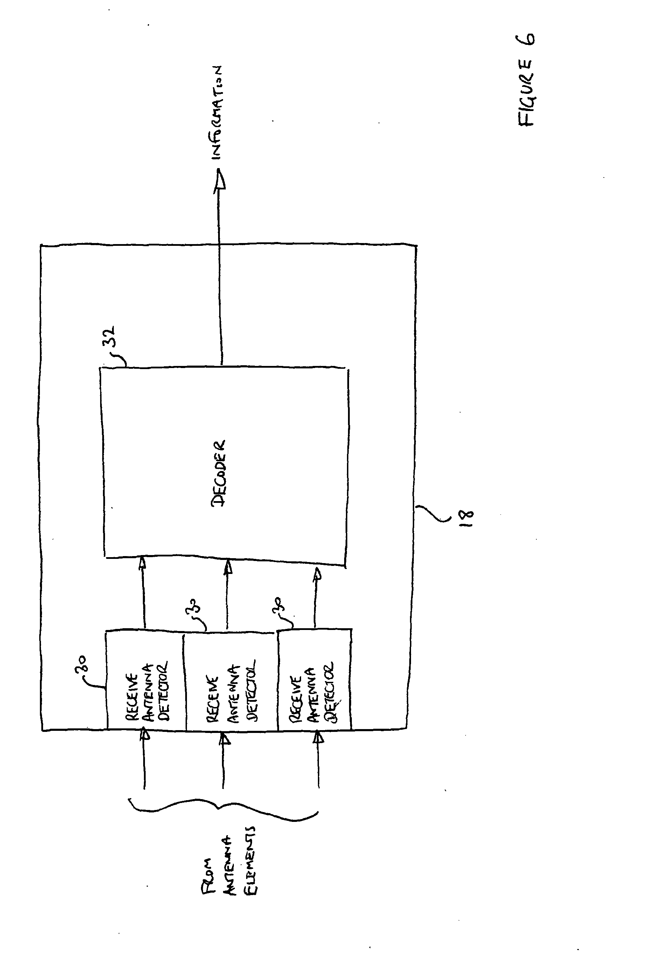

The process by which this is achieved will now be described with reference to Figures 4 and 5, Figure 4 illustrating operation of the encoder 24, while Figure 5 illustrates the process by which the symbol processor 26 processes symbols and then sends them to the corresponding transmit antenna element 20 at the same time.

Referring to Figure 4, in step S1-2, a pair of symbols for transmission is received. Then, in step S1-4, the pair of symbols (in this example $x_1$ and $x_2$) is transmitted on respective antenna elements, through the corresponding transmit antenna drivers 28. This concludes operation in the first symbol period of this process.

Then, in step S1-6, the complex conjugates of the symbols are then taken, and in step S1-8 the negative of the complex conjugates of the second symbol $x$ is taken. In step S1-10, the processed symbols $x_1^*$ and $- x_2^*$ are transmitted on the opposite transmit antennae 20 from their respective unprocessed versions in the previous symbol period.

In step S 1-12, the Alamouti encoder 24 checks to establish if any further symbols remain to be processed. If further symbols are to be transmitted, then the process recommences from step S1-2 onwards; otherwise; the process terminates.

At the same time, the process illustrated at Figure 5 is performed by the symbol processor 26. In step S2-2 a pair of symbols (in this example $x_3$ and $x_4$) are received.

Then, the first symbol $x_3$ is transmitted on the corresponding transmit antenna element through the transmit antenna driver 28 corresponding with the symbol processor 26. In step S2-6, and in the next symbol period, the complex conjugate $x_4^*$ of the second symbol $x_4$ is determined. In step S2-8, this complex conjugate $x_4^*$ is transmitted on the corresponding transmit antenna.

To establish whether any further symbols remain to be processed, a check is made in step S2-10; if further symbols remain, then the process restarts from step S2-2 onwards with a new pair of symbols, if not then the process terminates.

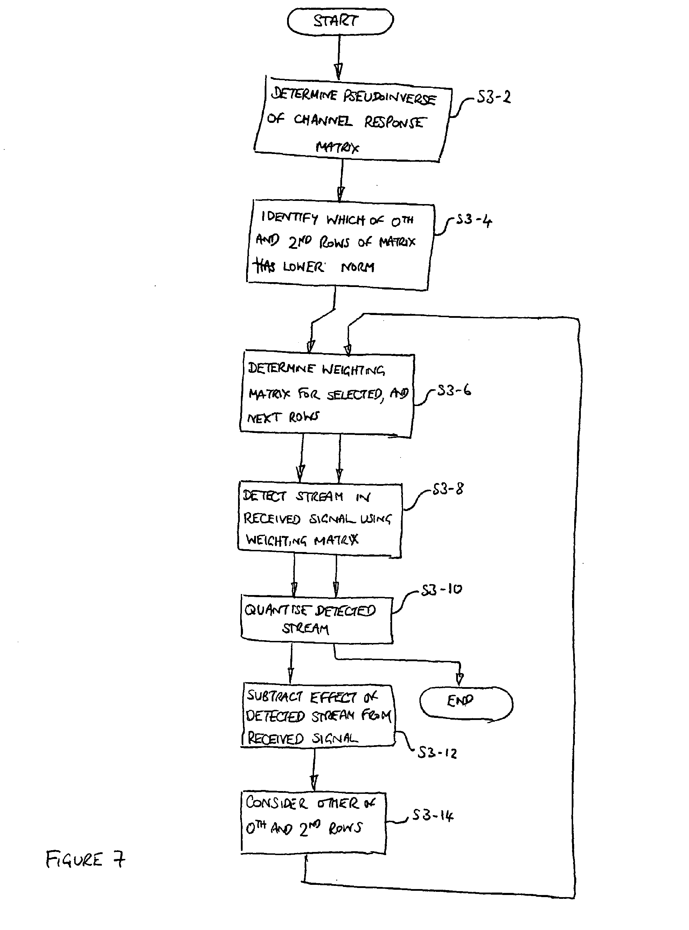

To receive and detect symbols in transmitted data, the receiver 18 of the communications unit 12 comprises, as illustrated in Figure 6, three receive antenna detectors 30, connected to corresponding antenna elements of the antenna unit 20, and a decoder 32. The decoder 32 is operable to process signals generated by the receive antenna detectors 30, to detect and decode information therein and to pass that information to that an output of the receiver 18 for use in the communications unit 12.

Operation of the decoder 32, in accordance with a first embodiment comprising impart processes which will be familiar to the skilled person, will now be described. While a further embodiment will be described in due course, which provides a decoder 32 in accordance with a specific embodiment of the invention, the first described embodiment demonstrates that a signal encoded and transmitted in accordance with the invention is capable of being detected and decoded using the existing equipment.

The signal received at the three receive antenna detectors can be expressed as:

$$\begin{bmatrix} r_{11} & r_{12} \\ r_{21} & r_{22} \\ r_{31} & r_{32} \end{bmatrix} = \begin{bmatrix} h_{11} & h_{12} & h_{13} \\ h_{21} & h_{22} & h_{23} \\ h_{31} & h_{32} & h_{33} \end{bmatrix} \begin{bmatrix} x_1 & -x_2^* \\ x_2 & x_1^* \\ x_3 & x_4^* \end{bmatrix} + \begin{bmatrix} \eta_{11} & \eta_{12} \\ \eta_{21} & \eta_{22} \\ \eta_{31} & \eta_{32} \end{bmatrix} \qquad (1)$$

where:

$r_{n\tau}$ denotes the received signal from the $n$th antenna element at time $\tau$,
$h_{nm}$ is the channel response of the nth receive antenna element due to transmit antenna element $m$,
$x_m$ are the transmitted symbols and
$\eta_{n\tau}$ is the noise from the nth antenna element at time $\tau$.

which can be expressed as follows:

$$r = Hx + \eta \qquad (2)$$

assuming that the channel response **H** over the two consecutive symbols period is unchanged.

To enable the extraction of the four symbols $x_1$, $x_2$, $x_3$ and $x_4$, this equation can thus be re-expressed in terms of a vector equation as follows:

$$\begin{bmatrix} r_{11} \\ r_{12}^{\bullet} \\ r_{21} \\ r_{22}^{\bullet} \\ r_{31} \\ r_{32}^{\bullet} \end{bmatrix} = \begin{bmatrix} h_{11} & h_{12} & h_{13} & 0 \\ h_{12}^{\bullet} & -h_{11}^{\bullet} & 0 & h_{13}^{\bullet} \\ h_{21} & h_{22} & h_{23} & 0 \\ h_{22}^{\bullet} & -h_{21}^{\bullet} & 0 & h_{23}^{\bullet} \\ h_{31} & h_{32} & h_{33} & 0 \\ h_{32}^{\bullet} & -h_{31}^{\bullet} & 0 & h_{33}^{\bullet} \end{bmatrix} \begin{bmatrix} x_1 \\ x_2 \\ x_3 \\ x_4 \end{bmatrix} + \begin{bmatrix} \eta_{11} \\ \eta_{12}^{\bullet} \\ \eta_{21} \\ \eta_{22}^{\bullet} \\ \eta_{31} \\ \eta_{32}^{\bullet} \end{bmatrix} \tag{3}$$

In view of the structure of the received signal, the OSIC algorithm, coupled with a ZF or MMSE detector, can be employed to detect the four symbols of equation (3) based on the estimated channel at the receiver. Due to the orthogonal structure of $x_1$ and $x_2$ and also the non interfering symbols between $x_3$ and $x_4$, the resulting SINR of the Alamouti STBC encoded symbols ($x_1$ and $x_2$) and two symbols not encoded with Alamouti STBC ($x_3$ and $x_4$) will be similar.

Hence, the OSIC algorithm can decouple the signal pairs via the ZF or MMSE linear detector, determine the stronger stream, detect and subtract from the received signal. The following pair can then be detected.

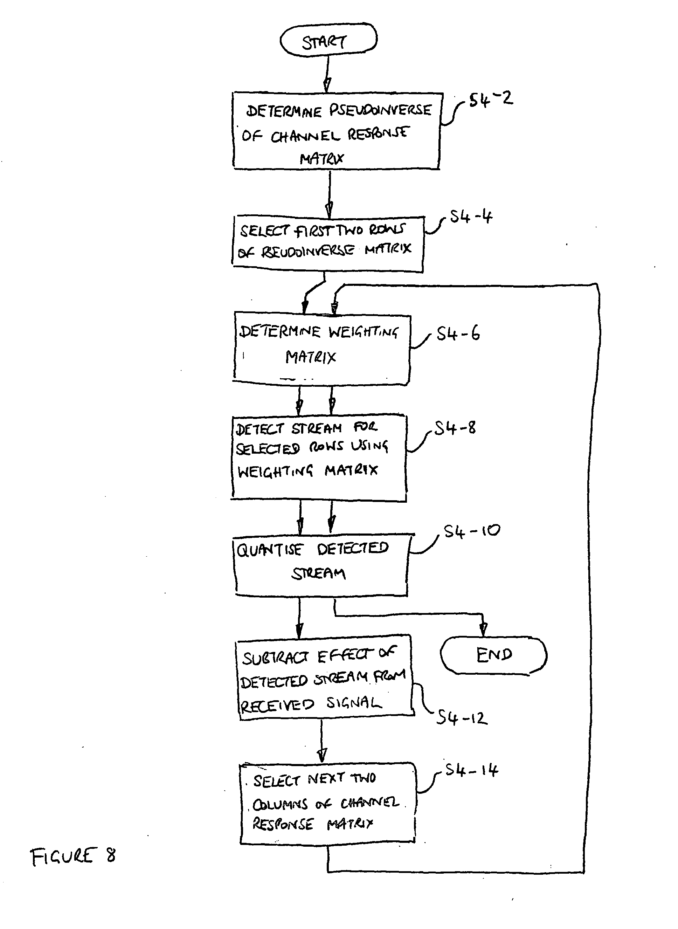

Figure 7 illustrates a method of decoding the received signal, performed in the decoder of the receiver, employing the OSIC algorithm, as earlier disclosed in the document referred to above by Wolniansky et al., applied to a signal previously encoded using the approach described above in accordance with an embodiment of the invention. This illustrates that previously implemented receiving methods can be used to receive and decode signals encoded in accordance with the present invention.

For simplicity, only the ZF solution of the decoding method will be discussed here, though it will be appreciated that appropriate modifications can be made to the decoding method to implement the MMSE solution instead.

Firstly, in step S3-2, the pseudoinverse **G** of the channel response matrix H is determined:

$$G = H^+ \tag{4}$$

Then, in step S3-4, the norm for the $(2i)$th row of **G**, for $i = 0$ and 1, is determined. It will be appreciated that this row numbering scheme has been designed so that the first row has the row number 0. The row number for the row with the smaller of the two calculated norms is then selected.

$$k = \arg\min \|G_{2i}\|^2 \tag{5}$$

The row with the smaller norm signifies which of the Alamouti STBC or non-Alamouti streams has the higher signal-to-noise-ratio (SNR). At this stage, the norm of the $(2i+1)$th row is not calculated because this will be equal to the norm of the $(2i)$th row due to the orthogonal structure of the Alamouti STBC and non-Alamouti STBC encoded symbols over two time periods.

Having determined which row k has the lowest norm, the weighting matrix **w** for the $k$th and $(k+1)$th row is then determined in step S3-6:

$$w = G_{k:k+1} \tag{6}$$

where $\mathbf{G}_{k:k+1}$ denotes the row vector from row $k$ to row $k+1$ in **G**.

Following this, in step S3-8, the decoder detects the $k$ and $k+1$ stream $\mathbf{y}_{k:k+1}$ :

$$y_{k:k+1} = wr \tag{7}$$

and then, in step S3-10, $\mathbf{y}_{k:k+1}$ is quantised:

$$\hat{x}_{k:k+1} = Q(y_{k:k+1})\tag{8}$$

In step S3-12, the effect of $\hat{x}_{k:k+1}$ is subtracted from the received signal **r:**

$$r'=r-H_{k:k+1}\hat{x}_{k:k+1}\tag{9}$$

where $\mathbf{H}_{k:k+1}$ denotes the column vector from $k$ to $k+1$.

Following step S3-12, in step S3-14 consideration passes to the other of the rows considered in step S3-4, and the process continues from step S3-6 onwards, determining a new weighting matrix as follows:

$$w = (H_{k:k+1})^H\tag{10}$$

Using this weighting matrix, the detector is able to detect the associated stream in the received signal r' (from which the effect of the earlier considered stream has already been subtracted) and then also to quantise that second detected stream.

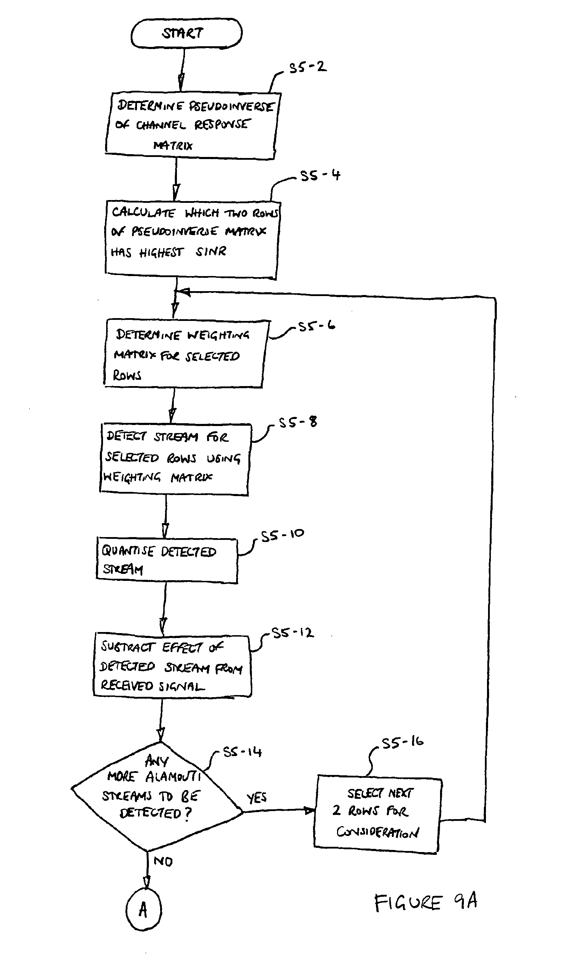

Figure 8 illustrates an alternative to the method illustrated in figure 7, in accordance with the invention, to decode a signal encoded in the transmitter described earlier. Whereas, as demonstrated above, existing approaches can be used to detect transmitted symbols in the received signal, the method described here is specific to the transmitted signal.

Firstly, in step S4-2, the pseudoinverse **G** of the channel response matrix **H** is determined:

$$G = H^+\tag{11}$$

Then, in step S4-4, the Alamouti STBC encoded streams are considered first, by setting $k=0$. This takes advantage of the assumption that Alamouti STBC encoded streams will have higher signal to noise ration than an unencoded stream. Thus, it is inevitable that an Alamouti stream will be detected first. Then in step S4-6, the weighting matrix is determined for the $k$th and $(k+1)$th row (corresponding with the $k$th and $(k+1)$th column of the channel response matrix):

$$w = G_{k:k+1}\tag{12}$$

In step S4-8, the k and $k+1$ stream are detected:

$$y_{k:k+1} = wr\tag{13}$$

and then, in step S4-10, $\mathbf{y}_{k:k+1}$ is quantised:

$$\hat{x}_{k:k+1} - Q(y_{k:k+1})\tag{14}$$

The effect of $\hat{x}_{k:k+1}$ is then subtracted in step S4-12 from the received signal:

$$r' = r - H_{k:k+1}\hat{x}_{k:k+1}\tag{15}$$

where $\mathbf{H}_{k:k+1}$ denotes the column vector from $k$ to $k+1$.

In step S4-14, $k$ is set to 2, to refer to the third (column 2) and fourth (column 3) columns of the channel response vector which relate to the non-Alamouti streams. Then, the procedure continues from step S4-6, by determining the MRC weighting matrix, for detecting the non-Alamouti encoded symbols:

$$w = (H_{k:k+1})^H \tag{16}$$

This weighting matrix is used because it is operable to extract data in accordance with the MRC technique.

Then, the procedure continues from step S4-8, decoding the non-Alamouti streams from the received signal r' having had the effect of the Alamouti STBC encoded signal subtracted therefrom, and then in step S4-10 quantising the resultant stream before the procedure ends.

It will be appreciated that this latter described method, in accordance with an embodiment of the invention, can be provided in modified form to implement the MMSE solution. However to determine $k$ in such circumstances, the full SINR needs to be calculated, whereas, in the ZF solution the norm of **G** is sufficient to determine the highest SNR and thus which symbols should be extracted from the received signal first.

In the OSIC algorithm used in the method illustrated in Figure 7, it can be seen that the calculation of the SINR of each stream is required as well as the selection of the highest magnitude from this calculation. However, in the algorithm used in the method illustrated in Figure 4, this calculation is not required due to the robustness of Alamouti STBC, which the latter algorithm exploits by detecting the Alamouti STBC encoded streams first. Thus, while the invention provides an encoded signal which can be detected and from which data can be extracted by conventional methods, it is also the case that the above description also provides an improved method of decoding such a signal, such as in a receiver.

While the present invention is described herein with reference to a receiver having three receive antennae and associated detectors, it will be appreciated that this is merely one example; alternative embodiments might employ two antennae, or more than three antennae.

In the case of an example wherein two antennae are employed at the receiver, a simplified version of the processing steps to derive weighting functions is possible. Firstly, equation 1, which relates to the received signal vector, is re-expressed as follows:

$$
\begin{bmatrix} r_{11} & r_{12} \\ r_{21} & r_{22} \end{bmatrix}
=
\begin{bmatrix} h_{11} & h_{12} & h_{13} \\ h_{21} & h_{22} & h_{23} \end{bmatrix}
\begin{bmatrix} x_1 & -x_2^* \\ x_2 & x_1^* \\ x_3 & x_4^* \end{bmatrix}
+
\begin{bmatrix} \eta_{11} & \eta_{12} \\ \eta_{21} & \eta_{22} \end{bmatrix}
\tag{17}
$$

Equation 3 thus re-expresses as follows:

$$
\begin{bmatrix} r_{11} \\ r_{12}^* \\ r_{21} \\ r_{22}^* \end{bmatrix}
=
\begin{bmatrix} h_{11} & h_{12} & h_{13} & 0 \\ h_{12}^* & -h_{11}^* & 0 & h_{13}^* \\ h_{21} & h_{22} & h_{23} & 0 \\ h_{22}^* & -h_{21}^* & 0 & h_{23}^* \end{bmatrix}
\begin{bmatrix} x_1 \\ x_2 \\ x_3 \\ x_4 \end{bmatrix}
+
\begin{bmatrix} \eta_{11} \\ \eta_{12}^* \\ \eta_{21} \\ \eta_{22}^* \end{bmatrix}
\tag{18}
$$

The remainder of the analysis follows as before.

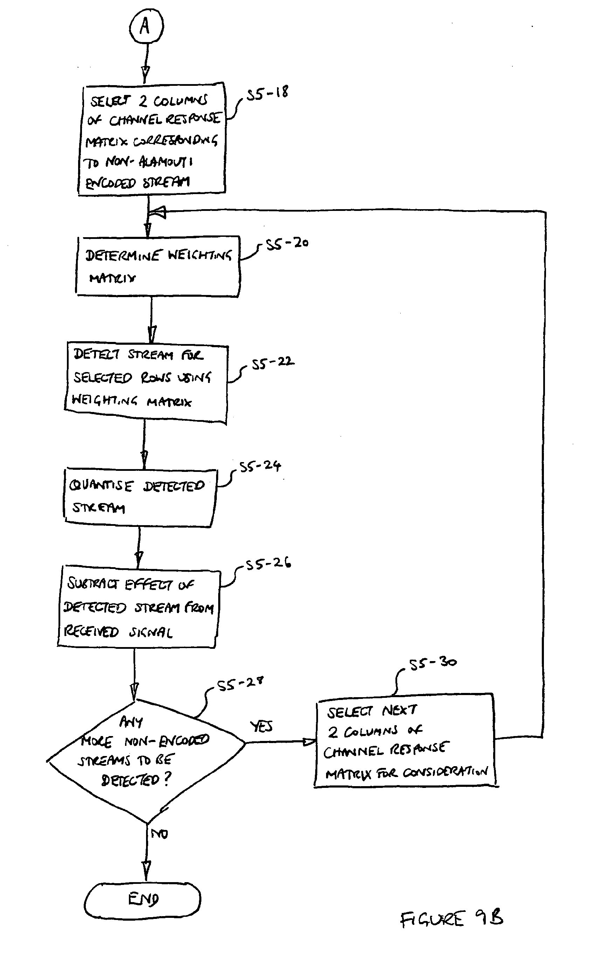

Figure 9 (which is comprised of figures 9A and 9B illustrating steps to be treated as sequential parts of the same process) illustrates a process performed in a receiver according to a further arrangement in accordance with the invention, in which six antennae are provided, to receive two Alamouti encoded signals and two un-encoded signals merely modulated using QAM. It will be appreciated that this example, by describing a process providing an even number of antennae and in the plurality, demonstrates the applicability of the invention to devices and processes using spatial transmission with many spatially displaced antennae.

The process commences in step S5-2 by determining the pseudoinverse **G** of the channel response matrix **H**.

Then, in step S5-4, the Alamouti STBC encoded streams are considered first. The pair of rows ($i$:$i$+1) of the pseudoinverse matrix with the highest Signal to Interference-plus-Noise (SINR) measure is determined.

Then in step S5-6, the weighting matrix is determined for the identified rows:

$$w = G_{i:i+1} \tag{19}$$

In step S5-8, the stream corresponding with the identified rows is detected:

$$y_{i:i+1} = wr \tag{20}$$

and then, in step S5-10, $y_{i:i+1}$ is quantised:

$$x_{i:i+1} = Q(y_{i:i+1}) \tag{21}$$

The effect of $\hat{x}_{i:i+1}$ is then subtracted in step S5-12 from the received signal:

$$r' = r - H_{i:i+1}\, \hat{x}_{i:i+1} \tag{22}$$

where $H_{i:i+1}$ denotes the column vector from $i$ to $i+1$.

In step S5-14, the process determines if further Alamouti encoded streams remain to be extracted and decoded. This is performed on the basis of a simple count, as the receiver will have been predetermined to anticipate a particular structure of signal.

If further rows remain to be considered as they represent Alamouti encoded data symbols, then in step SS-16 the rows representing the next strongest signal are selected for consideration in step S5-6. This part of the process repeats until, in step S5-14, it is determined that no further Alamouti encoded data remains to be extracted from the signal. At this point the process continues to step S5-18 (Figure 9B) in which two columns of the channel response matrix, corresponding to a non-Alamouti encoded stream, are selected for consideration.

In step S5-20, the weighting matrix for these columns is determined:

$$w = (H_{i:i+1})^{H} \tag{23}$$

As before, the weighting matrix is then applied, in step S5-22, to the received signal to detect the corresponding stream of QAM modulated data. The detected stream is then quantised in step S5-24, and the effect of the detected stream is subtracted from the received signal in step S5-26.

In step S5-28, the process determines if further non-Alamouti encoded streams remain to be extracted and decoded. Again, this is performed on the basis of a simple count. If further rows remain to be considered as they represent Alamouti encoded data symbols, then in step S5-30 the columns of the channel response matrix representing the next strongest signal are selected for consideration, and processing of these continues from step S5-20 onwards.

Once all streams have been considered, and data extracted, and no further columns of the channel response matrix are to be considered, whether through Alamouti decoding or merely through QAM modulation, the process ends.

It will be appreciated that, in the above described example, the receiver could be adapted to be operable to receive a single Alamouti STBC encoded stream (on two antennae) together with four QAM modulated streams (on the other four antennae).

In the general case, therefore, it will be understood that a receiver comprising a plurality of receiving antennae, spaced for receiving signals transmitted in accordance with a spatial modulation scheme, can be configured to receive two types of streams, one set of antennae being set up to receive Alamouti STBC encoded streams and the other one or more antennae being set up to receive non-Alamouti encoded streams, such as modulated by QAM.

In alternative to the example illustrated in Figure 9, the calculation of SINR could be omitted. In this alternative, the process of extracting streams of data could be carried out merely by detecting and extracting the two Alamouti streams successively, on each occasion removing the effect of the stream from the received signal, and then detecting and removing the unencoded QAM modulated streams thereafter.

Preferably, in all the described examples, the configuration of the transmitter is such that Alamouti STBC encoding is applied to adjacent transmit antennae. In this context, adjacent transmit antennae are those that are either physically closest or which have higher correlation than other antennae in the transmitter. In this way, robustness to correlated fading is enhanced because the average correlation of the non-Alamouti stream to the two Alamouti streams will be less than in the case where the non-Alamouti stream is adjacent to both Alamouti STBC antennae.

However it should be emphasised that the hybrid transmit process and apparatus described herein, with reference to the illustrated embodiments, will operate effectively for any configuration of antennae, regardless of adjacency.

As an alternative to the described receiving method in accordance with the invention, with reference to figures 8 and 9, the streams can be detected in the reverse order; that is to say, the non-Alamouti stream can be detected first followed by the Alamouti STBC streams. In this case the performance difference as compared to the proposed algorithm will vary according to the QAM constellation used.

Though omitted for convenience from the illustration in Figure 1, it will be understood that the communications units 12 may comprise a general purpose computer configured with communications apparatus of conventional type.

The illustrated embodiment of a transmitter configured in accordance with the invention shows three transmit antennae; however it will be appreciated that this is a minimum number and that further transmit antennae can additionally be provided, with an appropriate combination of Alamouti STBC and non-Alamouti streams.

Further, while the described embodiment shows a QAM modulator in the transmitter preceding, in processing order, the fragmenter, it would equally be possible to provide QAM modulation functionality to both the Alamouti STBC encoder and the symbol processor after fragmenting.

Further, an alternative embodiment provides a transmitter in which the symbol processor is omitted completely - the transmitting of the second category of symbols alternately in conjugate form is a preferred feature allowing better use of different parts of the QAM constellation used in this implementation.

Other modulation systems can be used in alternative to QAM. PSK is one example of a suitable alternative which can be implemented in accordance with the invention.

It will be appreciated that the fragmenter described herein, which fragments alternately encountered successive pairs of symbols to two categories, is only one of various alternative embodiments. For example, a fragmenter could fragment a sequence of four symbols $x_1$, $x_2$, $x_3$, $x_4$ by alternately allocating symbols to categories - a first category thus receiving $x_1$ and $x_3$ while a second category receives $x_2$ and $x_4$. Any number of fragments of whatever selected symbols of a sequence of symbols could be provided in accordance with the invention.

The configuration of the Alamouti STBC and non-Alamouti antennae in a transmitter according to the invention can be implemented in various combinations, depending on which is more robust to correlated fading. While the illustrated embodiment arranges the antennae in an allocation with two adjacent antennae transmitting Alamouti data while a third transmits non-Alamouti data, the non-Alamouti allocated antenna could alternatively be interposed between the two antennae allocated to transmit the Alamouti data.

To further improve system performance, power variation across transmit antennae can be implemented. This means that a relatively higher power signal can be applied to the Alamouti allocated antenna, or the non-Alamouti allocated antenna, as required, given prevailing conditions in the system concerned.

To further improve system performance, adaptive modulation across transmit antennae could be applied in a variation of the above described embodiment. In that case, a modulation unit will be placed in the process following the fragmentation of symbols, thus allowing the provision of different transmit antenna modulation schemes to different antennae. In this case the preferred configuration involved allocating the higher constellation to the Alamouti streams due to it being the more robust of the two categories. The advantage of this allocation is the omission of channel feedback information required allocating the higher constellation to the stronger channel.

Due to its orthogonal structure, the present invention eliminates the need for the extensive processing of inverse matrices in the ZF or MMSE solutions, as described in the document referred to above by Rouquette-Leveil et al.

Conventionally the idea of extending Alamouti STBC for more than 2 transmit antennae only applies to even number of antennae. In the apparatus and method described herein, Alamouti robustness can be achieved given an odd number (greater than 1) of transmit antennae.

Further, while it is shown herein that the resultant signal can be decoded using a conventional OSIC algorithm at the receiver, the use of the OSIC algorithm can be replaced also by a receiving and decoding method provided in accordance with the invention which take full advantage of the inherent nature of Alamouti streams being more robust as compared to their non-Alamouti counterpart.

The present invention has been described by way of example using encoding of data at a transmitter, and decoding of data at a receiver, in the space-time domain, i.e. transmitting and receiving at two or more relatively spatially displaced antennae and encoding and decoding over two symbols spaced in time. An alternative embodiment of the invention provides that the encoding and decoding of data, and corresponding transmitting and receiving, can be achieved in the space-frequency domain, i.e. encoding data in the frequency domain for transmission at two relatively spaced transmitting antennae, and correspondingly decoding data from two or more relatively spaced receiving antennae, and decoding the data modulated and encoded in the frequency domain. From the foregoing description, it will be evident how the structures of the transmitter and receiver, and the methods of operation thereof, can be adapted to operate using this alternative approach. A typical example would be to encode the symbols on two adjacent OFDM sub carriers.

**Claims**

1. A method of transmitting a signal from a transmitter (16) in a communications system, comprising the steps of separating symbols of data to be transmitted into two categories, encoding the first category of symbols using an Alamouti encoding scheme, preparing the second category of symbols without Alamouti encoding, and transmitting all symbols using spatial transmission.

2. A method of transmitting a signal according to claim 1 wherein the step of separating symbols comprises selecting successive pairs of symbols of a stream of symbols for transmission.

3. A method of transmitting a signal according to claim 1 or claim 2 wherein the step of separating symbols comprises selecting alternate successive pairs of symbols into said first and second categories.

4. A method of transmitting a signal according to any preceding claim wherein the step of encoding a pair of symbols in the first category of symbols using an Alamouti scheme includes the step of encoding the pair of symbols for simultaneous transmission on spatially relatively displaced antennas.

5. A method of transmitting a signal according to any preceding claim wherein the step of encoding a pair of symbols in the first category of symbols using an Alamouti scheme includes the step of encoding the complex conjugates of the symbols for transmission in a subsequent symbol transmission period on said spatially relatively displaced antennas.

6. A method of transmitting a signal according to claim 5 wherein the later transmission of a complex conjugate is effected for each complex conjugate of a symbol on another antenna from that on which the corresponding original symbol had been transmitted previously.

7. A method of transmitting a signal according to claim 6 wherein two spatially displaced antennas are provided and the later transmission of a complex conjugate of a symbol is effected on the other of the two antennas from that on which the symbol was earlier transmitted.

8. A method of transmitting a signal according to any preceding claim wherein the step of preparing a pair of symbols in the second category of symbols includes the step of determining the complex conjugate of one of the symbols for transmission of said prepared symbols on successive symbol transmissions.

9. A method of transmitting a signal in accordance with any preceding claim and including the step of receiving symbols in an unmodulated form and applying a modulation process to the symbols to be transmitted.

10. A method of transmitting a signal in accordance with claim 9 wherein the symbols are modulated using QAM.

11. A method of transmitting a signal according to claim 9 or claim 10 including the step of applying a first modulation process to said first category of symbols and a second modulation process to said second category of symbols.

12. A method of transmitting a signal according to claim 11 wherein the first and second modulation processes include modulating data with respective first and second constellations of available symbols.

13. A method of transmitting a signal according to claim 12 wherein the first constellation is of higher order than said second constellation.

14. A method of transmitting a signal according to any preceding claim, in a transmitter comprising three spatially displaced transmitter antennae, wherein the step of transmitting the first category is effected using spatially adjacent transmitter antennae.

15. A method of transmitting a signal according to any preceding claim wherein the transmitting step is performed in the spatial temporal domain.

16. A method of receiving a spatial division multiplexed signal comprising the steps of identifying at least two signal components received on spatially displaced antennae, then performing a data stream extraction step comprising:

determining an estimated channel response from the signal components;
determining directly from the estimated channel response, a weighting function to apply to the received signal to extract a stream of data;
applying said weighting function so as to extract said stream; and
removing the effect of said stream of data from said received signal; then repeating said data stream extraction step at least once so as to extract at least one further stream of data thereafter.

17. A method of receiving a signal in accordance with claim 16 wherein one of said data stream extraction steps is performed to extract data encoded by means of Alamouti STBC, and another of said data stream extraction steps is performed to extract data transmitted without Alamouti encoding.

18. A method of receiving a signal in accordance with claim 17 wherein the first data stream extraction step is performed to extract data encoded by means of Alamouti STBC, and a later performed data stream extraction step is performed to extract data transmitted without Alamouti encoding.

19. A method of receiving a signal according to any one of claims 16 to 18 and further comprising a step of quantising a stream of data extracted in one of the extracting steps, so as to produce a series of symbols.

20. A method of receiving a signal according to any of claims 16 to 19 and further comprising the step of assembling a received sequence of symbols from the series of symbols resulting from the two extracting steps and corresponding quantising steps.

21. A method of receiving a spatial division multiplexed signal transmitted in accordance with any one of claims 1 to 15, comprising the steps of detecting a component of said signal having the highest signal to interference plus noise ratio, extracting symbols from said component and removing the effect of said detected component from said signal, then repeating said detecting and extracting steps until all symbols have been detected

22. A method of communicating a signal from a transmitter to a receiver in a communications system comprising the steps of transmitting a signal using the method of any one of claims 1 to 15 and then receiving and decoding a signal by any suitable process.

23. A method of communicating a signal in a communications system according to claim 22 wherein the step of receiving and decoding is effected by performing the method of any one of claims 16 to 20.

24. A transmitter (16) for transmitting a signal comprising separating means (22) for separating symbols of data to be transmitted into two categories, symbol encoding means (24) for encoding the first category of symbols using an Alamouti encoding scheme, transmission preparation means for preparing the second category of symbols without Alamouti encoding, and transmitting means (28) for transmitting all symbols using spatial transmission.

25. A transmitter according to claim 24 wherein the separating means is operable to select successive pairs of symbols of a stream of symbols for transmission.

26. A transmitter according to claim 24 or claim 25 wherein the separating means is operable to select alternate successive pairs of symbols into said first and second categories.

27. A transmitter according to any of claims 24 to 26 wherein the encoding means is operable to encode the pair of symbols for simultaneous transmission on spatially relatively displaced antennas.

28. A transmitter according to any of claims 24 to 27 wherein the encoding means is operable to encode the complex conjugates of the symbols for transmission in a subsequent symbol transmission period on said spatially relatively displaced antennas.

29. A transmitter according to claim 28 wherein the encoding means is operable to effect the later transmission of a complex conjugate for each complex conjugate of a symbol on another antenna from that on which the corresponding original symbol had been transmitted previously.

30. A transmitter according to claim 29 comprising two spatially displaced antennas are provided, wherein the transmitter is operable to effect the later transmission of a complex conjugate of a symbol on the other of the two antennas from that on which the symbol was earlier transmitted.

**31.** A transmitter according to any of claims 24 to 30 wherein the transmission preparation means is operable to prepare a pair of symbols in the second category of symbols including by determining the complex conjugate of one of the symbols for transmission of said prepared symbols on successive symbol transmissions.

**32.** A transmitter in accordance with any of claims 24 to 31 and including modulating means operable to receive symbols in an unmodulated form and to apply a modulation process to the symbols to be transmitted.

**33.** A transmitter in accordance with claim 32 wherein the modulating means is operable to apply a QAM scheme to symbols to be modulated.

**34.** A transmitter according to claim 32 or claim 33 wherein the modulating means comprises first and second category modulating means, the first category modulating means being operable to apply a first modulation process to said first category of symbols and said second category modulating means being operable to apply a second modulation process to said second category of symbols.

**35.** A transmitter according to claim 34 wherein the first and second category modulation means are each operable to modulate data with respective first and second constellations of available symbols.

**36.** A transmitter according to claim 35 wherein the first constellation is of higher order than said second constellation.

**37.** A transmitter according to any of claims 24 to 36, comprising three spatially displaced transmitter antennae, wherein the transmitting means is operable to transmit the first category of symbols using spatially adjacent transmitter antennae.

**38.** A transmitter according to any of claims 24 to 37 wherein the transmitting means is operable to transmit in the spatial temporal domain.

**39.** A receiver (18) for receiving a spatial division multiplexed signal comprising component identifying means for identifying at least two signal components received on spatially displaced antennae, channel response determining means for determining an estimated channel response from the signal components, weighting function determining means for determining directly from the estimated channel response, a weighting function to apply to the received signal to extract a stream of data, stream extraction means for applying said weighting function so as to extract said stream and for removing the effect of said stream of data from said received signal, said weighting function determining means and said stream extraction means being operable to be applied repeatedly to said signal so as to extract at least one further stream of data thereafter.

**40.** A receiver according to claim 39 wherein said weighting function determining means and stream extraction means are operable to extract data either encoded by means of Alamouti STBC, or transmitted without Alamouti encoding, and wherein the receiver is operable to apply the weighting function determining means and stream extraction means at least once to extract a stream encoded by means of Alamouti STBC and at least once to extract a stream transmitted without Alamouti encoding.

**41.** A receiver according to claim 40 wherein the receiver is operable to apply the weighting function determining means and stream extraction means in a first instance to extract a stream encoded by means of Alamouti STBC and in a later instance to extract a stream transmitted without Alamouti encoding.

**42.** A receiver according to claim 40 or claim 41 and further comprising sampling means for quantising a stream of data extracted in one of the extracting steps, so as to produce a series of symbols.

**43.** A receiver according to claim 42 and further comprising symbol sequencing means for assembling a received sequence of symbols from the series of symbols resulting from the extracting means and corresponding sampling means.

**44.** A receiver for receiving a spatial division multiplexed signal transmitted in by a transmitter in accordance with any one of claims 24 to 38, comprising detecting means for detecting a component of said signal having the highest signal to interference plus noise ratio, symbol extracting means for extracting symbols from said component and removing the effect of said detected component from said signal, the receiver being operable to cause the application of said detecting means and said symbol extracting means until all symbols in said signal have been detected.

45. A communications system comprising a transmitter and a receiver, the transmitter being in accordance with any of claims 24 to 38.

46. A communications system in accordance with claim 45 wherein the receiver is in accordance with any of claims 39 to 44.

47. A computer program product, comprising a computer readable storage medium on which is stored information which, when loaded into a computer causes the computer to perform a method of transmitting a signal according to any of claims 1 to 15.

48. A computer program product, comprising a computer readable storage medium on which is stored information which, when loaded into a computer causes the computer to perform a method of receiving a spatial division multiplexed signal according to any of claims 16 to 23.

49. A computer program product, comprising a computer readable storage medium on which is stored information which, when loaded into a computer, causes the computer to operate as a transmitter according to any of claims 24 to 38.

50. A computer program product, comprising a computer readable storage medium on which is stored information which, when loaded into a computer, causes the computer to operate as a receiver according to any of claims 39 to 44.

51. A computer receivable signal bearing information which, when loaded into a computer, causes the computer to perform a method of transmitting a signal according to any of claims 1 to 14.

52. A computer receivable signal bearing information which, when loaded into a computer, causes the computer to perform a method of receiving a spatial division multiplexed signal according to any of claims 15 to 23.

53. A computer receivable signal bearing information which, when loaded into a computer, causes the computer to operate as a transmitter according to any of claims 24 to 38.

54. A computer receivable signal bearing information which, when loaded into a computer, causes the computer to operate as a receiver according to any of claims 39 to 44.

FIGURE 1

TO ANTENNA ELEMENTS

16

QAM MODULATOR 21

FRAGMENTER 22

ALAMOUTI ENCODER 24

SYMBOL PROCESSOR

TRANSMIT ANTENNA DRIVER 28

TRANSMIT ANTENNA DRIVER 28

TRANSMIT ANTENNA DRIVER 28

INFORMATION

FIGURE 2

TO ALAMOUTI ENCODER

TO SYMBOL PROCESSOR

FIGURE 3

$x_8$ | $x_7$ | $x_6$ | $x_5$ | $x_4$ | $x_3$ | $x_2$ | $x_1$

START

SI-2 — RECEIVE PAIR OF SYMBOLS FOR TRANSMISSION

SI-4 — TRANSMIT SYMBOLS ON RESPECTIVE ANTENNAE

SI-6 — TAKE CONJUGATES OF SYMBOLS

SI-8 — TAKE NEGATIVE OF CONJUGATE OF SECOND SYMBOL

SI-10 — TRANSMIT PROCESSED SYMBOLS ON OPPOSITE ANTENNAE

SI-12 — MORE SYMBOLS TO BE PROCESSED? — YES

NO

END

1ST SYMBOL PERIOD

2ND SYMBOL PERIOD

FIGURE 4

START

S2-2 — RECEIVE PAIR OF SYMBOLS FOR TRANSMISSION

FIRST SYMBOL PERIOD

S2-4 — TRANSMIT FIRST SYMBOL ON TRANSMIT ANTENNA

S2-6 — DETERMINE CONJUGATE OF SECOND SYMBOL

SECOND SYMBOL PERIOD

S2-8 — TRANSMIT CONJUGATE OF SECOND SYMBOL ON TRANSMIT ANTENNA

S2-10 — FURTHER SYMBOLS TO BE PROCESSED? — YES / NO

END

FIGURE 5

FIGURE 6

START

DETERMINE PSEUDOINVERSE OF CHANNEL RESPONSE MATRIX — S3-2

IDENTIFY WHICH OF 0TH AND 2ND ROWS OF MATRIX HAS LOWER NORM — S3-4

DETERMINE WEIGHTING MATRIX FOR SELECTED, AND NEXT ROWS — S3-6

DETECT STREAM IN RECEIVED SIGNAL USING WEIGHTING MATRIX — S3-8

QUANTISE DETECTED STREAM — S3-10

SUBTRACT EFFECT OF DETECTED STREAM FROM RECEIVED SIGNAL — S3-12

END

CONSIDER OTHER OF 0TH AND 2ND ROWS — S3-14

FIGURE 7

START

DETERMINE PSEUDOINVERSE
OF CHANNEL RESPONSE
MATRIX — S4-2

SELECT FIRST TWO ROWS
OF PSEUDOINVERSE MATRIX — S4-4

DETERMINE WEIGHTING
MATRIX — S4-6

DETECT STREAM FOR
SELECTED ROWS USING
WEIGHTING MATRIX — S4-8

QUANTISE DETECTED
STREAM — S4-10

SUBTRACT EFFECT OF
DETECTED STREAM FROM
RECEIVED SIGNAL — S4-12

END

SELECT NEXT TWO
COLUMNS OF CHANNEL
RESPONSE MATRIX — S4-14

FIGURE 8

START

DETERMINE PSEUDOINVERSE OF CHANNEL RESPONSE MATRIX — S5-2

CALCULATE WHICH TWO ROWS OF PSEUDOINVERSE MATRIX HAS HIGHEST SINR — S5-4

DETERMINE WEIGHTING MATRIX FOR SELECTED ROWS — S5-6

DETECT STREAM FOR SELECTED ROWS USING WEIGHTING MATRIX — S5-8

QUANTISE DETECTED STREAM — S5-10

SUBTRACT EFFECT OF DETECTED STREAM FROM RECEIVED SIGNAL — S5-12

ANY MORE ALAMOUTI STREAMS TO BE DETECTED? — S5-14

YES → SELECT NEXT 2 ROWS FOR CONSIDERATION — S5-16

NO → A

FIGURE 9A

24

(A)

SELECT 2 COLUMNS OF CHANNEL RESPONSE MATRIX CORRESPONDING TO NON-ALAMOUTI ENCODED STREAM — S5-18

DETERMINE WEIGHTING MATRIX — S5-20

DETECT STREAM FOR SELECTED ROWS USING WEIGHTING MATRIX — S5-22

QUANTISE DETECTED STREAM — S5-24

SUBTRACT EFFECT OF DETECTED STREAM FROM RECEIVED SIGNAL — S5-26

ANY MORE NON-ENCODED STREAMS TO BE DETECTED? — S5-28

YES

SELECT NEXT 2 COLUMNS OF CHANNEL RESPONSE MATRIX FOR CONSIDERATION — S5-30

NO

END

FIGURE 9B